# EUROPEAN PATENT SPECIFICATION

(11) **EP 2 566 071 B1**
(45) Date of publication and mention of the grant of the patent: **21.06.2017**
(21) Application number: 11305966.1
(22) Date of filing: 26.07.2011
(51) Int. Cl.: H04B 10/25, H04W 88/08

(54) **A circuit and a method for mixing an optical and an electrical signal**
Schaltung und Verfahren zum Mischen eines optischen und eines elektrischen Signals
Circuit et procédé pour mélanger un signal électrique et optique

(43) Date of publication of application: 06.03.2013
(73) Proprietor: ALCATEL LUCENT, 92100 Boulogne-Billancourt (FR)
(72) Inventor: Maier, Simone, 70565 Stuttgart (DE); Wiegner, Dirk, 71409 Schwaikheim (DE); Kuebart, Wolfgang, 70193 Stuttgart (DE)
(74) Representative: 2SPL Patentanwälte PartG mbB

(56) References cited:
- US-A- 4 737 832
- US-A- 5 696 467
- US-A- 5 838 473
- US-A1- 2010 225 752
- US-B1- 7 206 419
- VAN DE CASTEELE J ET AL: "Electro-optical mixing in an edge-coupled GaInAs/InP heterojunction phototransistor", ELECTRONICS LETTERS, IEE STEVENAGE, GB, vol. 32, no. 11, 23 May 1996 (1996-05-23), pages 1030-1032, XP006005148, ISSN: 0013-5194, DOI: 10.1049/EL:19960636

## Description

Embodiments of the present invention relate to mixing of optical and electrical signals, more particularly but not exclusively to mixing an uplink receive signal in a remote unit of a base station transceiver in a mobile communication network.

### Background

Demands for higher data rates for mobile services are steadily increasing. At the same time modern mobile communication systems as 3rd Generation systems (3G as abbreviation) and 4th Generation systems (4G as abbreviation) provide enhanced technologies, which enable higher spectral efficiencies and allow for higher data rates and cell capacities. The mobile communication infrastructure becomes more and more dense. The conventional base station transceiver in wireless communication systems like the Universal Mobile Telecommunication System (UMTS) and Long Term Evolution (LTE) system can be split in two separate units, a Remote Unit (RU) and a Central Unit (CU), connected either by electrical or optical links. This concept is well known and can be found in the product lineup of infrastructure suppliers.

The RU comprises a Radio Frequency (RF) frontend, i.e. analog transmit and receive RF components. For the uplink path the RU comprises a receive antenna, which can be reused as transmit antenna for the downlink signals. Moreover, in the uplink path the RU comprises filters corresponding to the uplink bandwidth and frequency as well as a Low Noise Amplifier (LNA). In the downlink path, the respective downlink filters are comprised together with a Power Amplifier (PA) and a transmit antenna, which can be identical with the receive antenna of the uplink path. The central unit supplies the Intermediate Frequency (IF) and/or the base band signal processing. Low delay times and high data rates are desirable for the data exchange between the RU and the CU to assure proper service quality, particularly when taking into account the multiple RUs which may be connected to a single CU.

In the current existing optical transmission system (Class-O system), the RU is connected to the CU unit via an optical link. In the uplink, i.e. when forwarding received signals from the RU to the CU, the optical light can be modulated with an electrical signal.

Document US 4,737,832 discloses an optical signal processor, which comprises a phototransistor for receiving optical signals and an input for receiving external electrical signals. The optical signal processor comprises a plurality of base regions connected, respectively, to the phototransistor and the input, for accumulating charges corresponding to the optical signals and the external electrical signals, and a gate electrically coupled thereto an insulating layer to the base regions to control the transfer of charges between them so as to permit mixing of optical and external electrical signals.

### Summary

Embodiments can be based on the finding that the optical signals used for forwarding the uplink receive signal form the RU to the CU can be modulated using a two amplitude level signal. For example, a Pulse-Width-Modulator (PWM) can be used to generate the modulated signal. The PWM is frequency agile while having a high bandwidth. The PWM may need a reference clock signal with a tunable frequency, depending on the received uplink signal frequency, when used for the uplink path. The reference clock signal can be transmitted to the remote unit in a separate fiber and detected with a photo diode. After opto-electronic or Optical/Electrical (O/E) conversion the signal can be applied to a normal electrical PWM.

Embodiments are based on the finding that there is a drawback in such a system as it requires additional conversion/component effort. Moreover, it is a finding that such additional effort can be circumvented when the clock signal can be provided directly to the PWM in the usually far away distributed remote unit while frequency tuning can be done in the central unit.

Embodiments are further based on the finding that an integrated device being capable of receiving the optical modulated reference clock signal, converting it to an electrical signal and providing the usual PWM functionality can be established. It is a further finding that this can be achieved by using a phototransistor used as an unbalanced mixer, i.e. a phototransistor used in an overdrive state.

Embodiments, therefore, provide a circuit for mixing an electrical input signal with an optical input signal to obtain an electrical output signal. The circuit comprises a phototransistor with an input for the optical input signal, an input for the electrical input signal, and an output for the electrical output signal. The circuit is adapted to operate the phototransistor in an overdrive state such that the output electrical signal comprises a clipped product signal of the electrical input signal and the optical input signal. In other words, the output electrical signal corresponds to the product of the electrical and optical input signals. The phototransistor is operated in a way that the output electrical signal is the mixing product of the electrical and optical input signals. For example, if the electrical input signal corresponds to a sinusoidal signal with a frequency f₁ and the optical input signal corresponds to a sinusoidal signal with a frequency f₂, then their product corresponds to the sum of two sinusoidal signals, one with a frequency f₁-f₂ and one with a frequency f₁+f₂. In embodiments, the circuit may further comprise a filter for isolating either the band around the frequency f₁-f₂ or the band around the frequency f₁+f₂ for further processing or transmission.

Moreover, the output electrical signal is clipped, i.e. it is not perfectly sinusoidal but its amplitudes are limited to a maximum value, i.e. they are clipped by said maximum value. Thus, the electrical output signal has flat parts, i.e. time periods wherein it is constant corresponding to a maximum value and time periods where it has value below the maximum value. In embodiments this can be achieved by operating the phototransistor in the overdrive state. The output electrical signal may correspond to a modulated signal, which has a signal part with a center frequency corresponding to a frequency of an envelope of the optical input signal and wherein the envelope of the modulated signal comprises information on the electrical input signal.

The circuit can be adapted to operate the phototransistor such that the output electrical signal changes between a first signal level and a second signal level, the output electrical signal comprising rising and falling edges between the first signal level and the second signal level, wherein a time or a time interval between the rising and falling edges signals or comprises information on the electrical input signal.

In further embodiments the circuit can be adapted to operate the phototransistor such that a time or a time interval between a first edge of the envelope of the electrical output signal and a subsequent second edge of the envelope of the electrical output signal represents a level of the electrical input signal. The phototransistor can be operated such that the envelope of the electrical output signal corresponds to an on-off-keying signal. The phototransistor can be operated such that the envelope of the electrical output signal corresponds to a pulse-width modulated electrical signal. In other words, the envelope of the modulated signal may correspond to an on-off-keying signal or a pulse-width modulated signal.

In embodiments the phototransistor can correspond to a bipolar transistor with a base terminal as input for the electrical input signal, a transparent part of the housing or an optical coupler as input for the optical input signal such that the optical input signal can reach a base-emitter junction, and a collector terminal as output for the electrical output signal. In embodiments several kinds of phototransistors can be used, for example, a Heterojunction Bipolar Transistor (HBT), a Heterojunction PhotoTransistor (HPT), a High-Electron-Mobility Transistor (HEMT), a Metal-Oxide-Semiconductor Field-Effect Transistor (MOSFET), a Complementary-Metal-Oxide-Semiconductor (CMOS)-transistor, a Bipolar Junction Transistor (HBT), a Unipolar Junction Transistor (UJT), a Drift Base Transistor (DBT), realized in Silicon Germanium (SiGe)-, Gallium Arsenide (GaAs)-, Gallium Nitride (GaN)-, Indium Phosphide (InP)-and mixed material systems, etc. It is to be noted that an optical coupler may be implemented on a surface of the semiconductor material of the phototransistor, if it is to be illuminated by the optical input signal from a light guide, as for example an optical fiber. The optical coupler is adapted to transport the optical input signal from a peripheral connector to said photosensitive surface of the phototransistor. Alternatively it is possible to directly connect or couple the optical signal to the photosensitive surface of the semiconductor material of the phototransistor.

In further embodiments, the circuit can further comprise a first impedance adapted to connect the emitter to a reference potential, a second impedance adapted to connect the collector to a supply potential, a third impedance adapted to connect the base terminal to the input for the electrical signal, and a fourth impedance adapted to connect the input for the electrical signal to the reference potential. The elements, which are connected to the terminals of the phototransistor, can be used to operate the phototransistor in an overdrive state such that the output electrical signal is clipped. In embodiments, this can also be achieved by components that set a Direct Current (DC) -offset to the input of the electrical signal such that the phototransistor is overdriven or that the phototransistor is operating as a limiting amplifier. The term limiting amplifier shall indicate that the output signal of the amplifier does not correspond to a scaled version of the input signal but is limited to a maximum value. In other words, the output signal is not a scaled replica of the input signal as with an ideal linear amplifier, but is limited to the maximum value whenever the ideal replica would be above said maximum value.

It is a further finding that a phototransistor can be used as an unbalanced mixer. For example, the phototransistor can be utilized as an Optically Injection Locked Self Oscillating Mixer (OIL-SOM). The phototransistor can be biased, i.e. the bias can be set in a way that it is functioning as a limiting amplifier. In other words, embodiments may operate a phototransistor as a single device in a manner to achieve O/E-conversion functionality and PWM in parallel.

The phototransistor can correspond to an Optically Injection Locked Self Oscillating Mixer. The optically injection-locked self-oscillating mixer comprises an electrical input, an optical input and an electrical output. The optically injection-locked self-oscillating mixer is adapted to mix the signal being input at the electrical input with the signal being input at the optical input in order to mix the two input signals and to output the mixed signal at the electrical output.

In some embodiments the circuit comprises a limiting amplifier for amplifying the electrical output signal for shortening rising and falling times between adjacent changes or edges in the amplitude of the electrical output signal. In embodiments the circuit may further comprise means for converting the electrical output signal to an optical output signal. For example, an Electiical/Optical-(E/O-) converter may be used to convert the electrical output signal to an optical output signal for further transmission.

In embodiments, the optical input signal may correspond to a reference clock signal from a central unit of a base station transceiver. The electrical input signal may correspond to an uplink receive signal from a receive antenna of a mobile communication system.

Embodiments further provide a remote unit for a base station transceiver of a mobile communication system, the base station transceiver comprising the remote unit and a central unit, the remote unit comprising one of the above described circuits.

Furthermore, embodiments may provide a method for mixing an electrical input signal with an optical input signal to obtain an electrical output signal. The method comprises a step of inputting the optical input signal into an input for the optical input signal of a phototransistor and inputting the electrical input signal into an input for the electrical input signal of the phototransistor. The method comprises a further step of overdriving the phototransistor to an overdrive state such that the output electrical signal comprises a clipped product signal of the electrical input signal and the optical input signal. The method further comprises the step of outputting the electrical output signal.

Embodiments can provide the advantage that hardware, cost and space can be saved and that sustainability of the conversion components in a RU can be improved.

Globally, Class-O is a promising system concept for future mobile communication systems. Embodiments may provide an integrated device or circuit, which can be used as a directly optically controllable PWM, so that the reference clock frequency in the remote unit can be flexibly adapted in the central unit.

### Brief description of the Figures

Some other features or aspects will be described using the following non-limiting embodiments of apparatuses and/or methods and/or computer programs by way of example only, and with reference to the accompanying figures, in which
Figure 1 shows an embodiment of a circuit;
Figure 2 shows another embodiment of a circuit;
Figure 3 shows another embodiment of a circuit;
Figure 4 shows a block diagram of an embodiment of a circuit with a subsequent limiting amplifier; and
Figure 5 shows a block diagram of an embodiment of a method.

### Description of some Embodiments

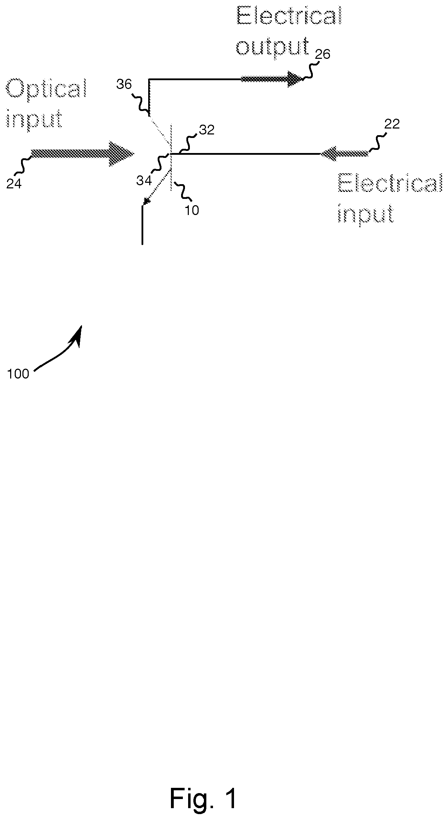

Figure 1 shows an embodiment of a circuit 100 for mixing an electrical input signal 22 with an optical input signal 24 to obtain an electrical output signal 26. The circuit 100 comprises a phototransistor 10 with an input 32 for the electrical input signal 22, an input 34 for the optical input signal 24, and an output 36 for the electrical output signal 26. The circuit 100 is adapted to operate the phototransistor 10 in an overdrive state such that the output electrical signal 26 comprises a clipped product signal of the electrical input signal 22 and the optical input signal 24.

In the embodiment depicted in Figure 1 the phototransistor 10 is a bipolar transistor with a base terminal as input 32 for the electrical input signal 22 and a transparent part of the housing or an optical coupler as input 34 for the optical input signal 24 such that the optical input signal 24 can reach the base-emitter junction of the phototransistor 10. The collector terminal of the phototransistor serves as output 36 for the electrical output signal 26.

The embodiment depicted in Figure 1 may also exemplify the principle architecture of an OIL-SOM 10, i.e. the phototransistor 10 may correspond to an OIL-SOM. The optical input signal 24 can be modulated with a reference clock signal when applied to the optical input 34 of the OIL-SOM. By applying an electrical uplink signal as electrical input signal 22 to the electrical input 32, the two input signals 22, 24 are multiplied. A DC bias of the phototransistor 10 can be set appropriately such that the phototransistor 10 is overdriven, and therefore the signal amplitude of the electrical output signal 26 can be clipped, i.e. it can be limited to a maximum value. A following additional limiting amplifier can be used to further improve the rise and fall times.

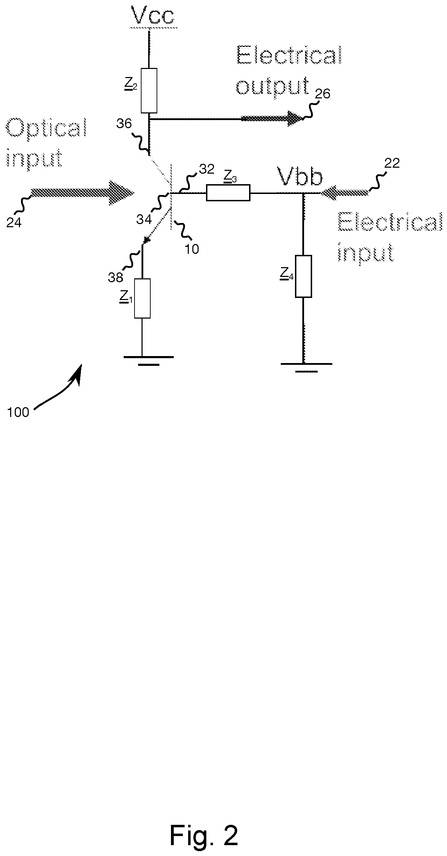

Figure 2 depicts another embodiment of a circuit 100, which has the same phototransistor 10 with the same inputs 32, 34 and output 36 as it was described with respect to Figure 1. Moreover, the same signals 22, 24, and 26 are shown in Figure 2. Here and in the following the same reference signs in the figures reference similar components with similar functionalities, repetitive descriptions can be omitted for clarity purposes.

The embodiment of the circuit 100 illustrated in Figure 2 further comprises a first impedance Z₁ adapted to connect the emitter 38 to a reference potential and a second impedance Z₂ adapted to connect the collector 36 to a supply potential, i.e. Common Collector Voltage (Vcc). The reference potential can, for example, be ground potential. Furthermore, the circuit 100 comprises a third impedance Z₃ adapted to connect the base terminal 32 to the input for the electrical input signal 22 and a fourth impedance Z₄ adapted to connect the input for the electrical input signal 22 to the reference potential.

In other embodiments, the circuit 100 can further comprise components to set a DC-offset of the input of the electrical signal 22 such that the phototransistor 10 is overdriven or that the phototransistor 10 is operating as a limiting amplifier 20.

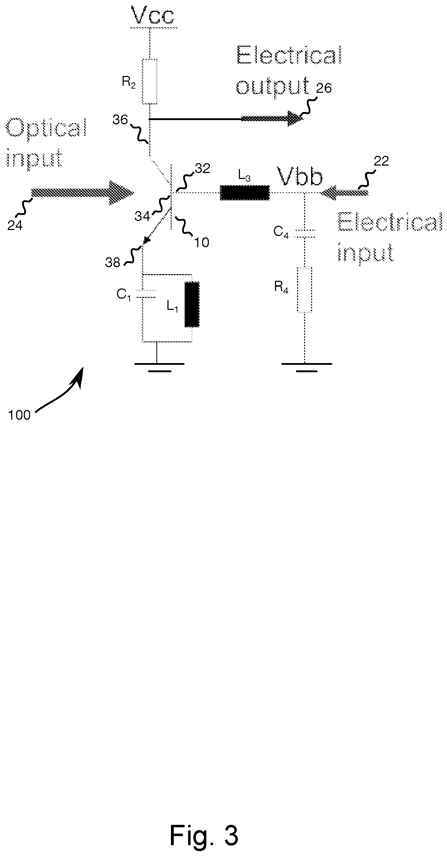

Figure 3 illustrates a similar embodiment as Figure 2, however the impedances are given more specifically. In this embodiment the phototransistor 10 can be a HPT which is based on InP semiconductor material and has a size of 7x7µm. Hfe, the small signal forward current gain, of the phototransistor 10 can be 100. Vcc can correspond to 1.5V and Vbb is selected such that I_{bb}, i.e. the current of the base terminal and of the electrical input signal 22, corresponds to 250µA. The maximum current evoked by the optical input signal 24 can correspond to 150µA. The maximum collector current Icc may correspond to 25mA. The first impedance Z₁ corresponds to a capacitor C₁ in parallel to an inductor L₁, which form an oscillating circuit, e.g. with an oscillating frequency corresponding to the desired output signal frequency. The second impedance Z₂ may correspond to an ohmic resistor R₂. The third impedance Z₃ may correspond to a serial inductor L₃, which may form a serial oscillating circuit together with a capacitor C₄ and a serial ohmic resistor R₄ forming the fourth impedance Z₄. In an embodiment these elements may have the following dimensions for a carrier frequency of 900 MHz:
C₁: 3 pF
L₁: 10 nH
R₂: 1 kOhm
L₃: 10 nH
C₄: 3 pF
R₄: 2 Ohm

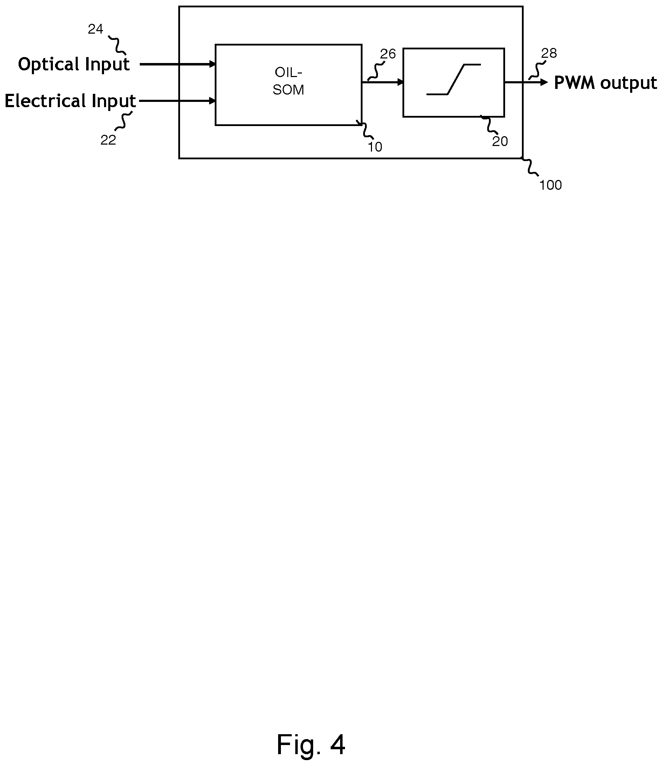

Figure 4 shows a block diagram of an embodiment of a circuit 100 with a subsequent limiting amplifier 20. The block diagram illustrates the electrical input signal 22 and the optical input signal 24, which are input to the phototransistor 10, which is implemented as OIL-SOM 10. Moreover, Figure 4 depicts a limiting amplifier 20, which is connected to the output of the OIL-SOM and which outputs a PWM signal 28 as amplified and clipped version of the electrical output signal 26. Generally, the circuit 100 can be adapted to operate the phototransistor 10 such that a time or a time interval between a first edge of the envelope of the electrical output signal 26 and a subsequent second edge of the envelope of the electrical output signal 26 represents a level of the electrical input signal 22. The circuit 100 can be adapted to operate the phototransistor 10 such that the envelope of the electrical output signal 26 corresponds to an on-off-keying signal and/or to operate the phototransistor 10 such that the envelope of the electrical output signal 26 corresponds to a pulse-width modulated electrical signal. In the embodiment illustrated by Figure 4 a PWM signal 28 is assumed as amplified and clipped version of the electrical output signal 26.

In other words, the output electrical signal 26 can correspond to a modulated signal. The modulated signal may have a signal part with a center frequency corresponding to a frequency of an envelope of the optical input signal 24 and the envelope of the modulated signal can comprise information on the electrical input signal 22. The envelope of the modulated signal may, for example, correspond to an on-off-keying signal, to a pulse-width modulated signal. As exemplified by the embodiment of Figure 4 the circuit 100 can further comprise a limiting amplifier 20 for amplifying the electrical output signal 26 for shortening rising and falling times between adjacent changes in the amplitude of the electrical output signal 26 to obtain, for example, a PWM output signal 28.

The optical input signal 24 can correspond to a reference clock signal from a central unit of a base station transceiver. The electrical input signal 22 can correspond to an uplink receive signal from a receive antenna of a mobile communication system. The electrical output signal 28 may then correspond to a signal having a center frequency or a carrier according to the reference clock being modulated with the uplink receive signal. In embodiments the circuit 100 may further comprise means for converting the electrical output signal to an optical output signal, e.g. implemented as an Electrical/Optical converter.

Embodiments may also comprise a remote unit for a base station transceiver of a mobile communication system. The base station transceiver can comprise the remote unit and a central unit, the remote unit comprising one of the circuits described above.

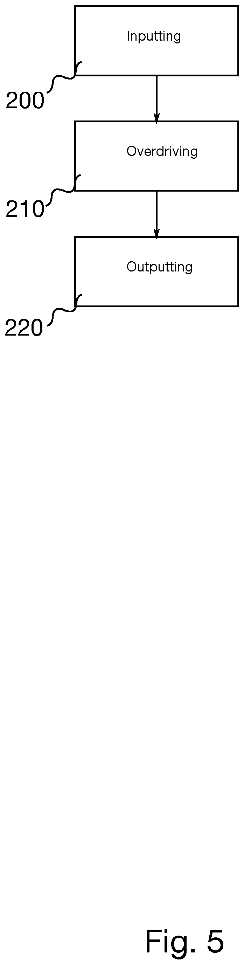

Figure 5 shows a block diagram of an embodiment of a method for mixing an electrical input signal 22 with an optical input signal 24 to obtain an electrical output signal 26. The method comprises a step of inputting 200 the optical input signal 24 into an input 34 for the optical input signal 24 of a phototransistor 10 and inputting the electrical input signal 22 into an input 32 for the electrical input signal 22 of the phototransistor 10. The method further comprises a step of overdriving 210 the phototransistor 10 to an overdrive state such that the output electrical signal 26 comprises a clipped product signal of the electrical input signal 22 and the optical input signal 24. The method comprises a step of outputting 220 the electrical output signal 26.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements mentioned in the description or shown in the Figures, including any functional blocks labeled as "means", "means for converting", etc., may be provided through the use of dedicated hardware, such as "a converter", etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention.

## Claims

1. A circuit (100) for mixing an electrical input signal (22) with an optical input signal (24) to obtain an electrical output signal (26), the circuit (100) comprising:
a phototransistor (10) with an input (32) for the electrical input signal (22);
an input (34) for the optical input signal (24); and
an output (36) for the electrical output signal (26), the circuit (100) further being adapted to operate the phototransistor (10) in an overdrive state such that the output electrical signal (36) comprises a clipped product signal of the electrical input signal (22) and the optical input signal (24).

2. The circuit (100) of claim 1, wherein the phototransistor (10) corresponds to a bipolar transistor (10) with a base terminal (32) as input for the electrical input signal (22), a transparent part (34) of the housing or an optical coupler as input for the optical input signal (24) such that the optical input signal (24) can reach a base-emitter junction, and a collector terminal (36) as output for the electrical output signal (26).

3. The circuit (100) of claim 2, which further comprises a first impedance (Z₁) adapted to connect the emitter (38) to a reference potential, a second impedance (Z₂) adapted to connect the collector (36) to a supply potential (Vcc), a third impedance (Z₃) adapted to connect the base terminal (32) to the input for the electrical signal (22), and a fourth impedance (Z₄) adapted to connect the input for the electrical signal (22) to the reference potential.

4. The circuit (100) of claim 1 further comprising components to set a DC-offset of the input of the electrical signal (22) such that the phototransistor (10) is overdriven or that the phototransistor is operating as a limiting amplifier.

5. The circuit (100) of claim 1 wherein the phototransistor corresponds to an Optically Injection Locked Self Oscillating Mixer.

6. The circuit (100) of claim 1 being adapted to operate the phototransistor (10) such that the output electrical signal (26) changes between a first signal level and a second signal level, the output electrical signal (26) comprising rising and falling edges between the first signal level and the second signal level, wherein a time or a time interval between the rising and falling edges signals or comprises information on the electrical input signal (22).

7. The circuit (100) of claim 1 being adapted to operate the phototransistor (10) such that a time or a time interval between a first edge of the envelope of the electrical output signal (26) and a subsequent second edge of the envelope of the electrical output signal (26) represents a level of the electrical input signal (22), and/or adapted to operate the phototransistor (10) such that the envelope of the electrical output signal (26) corresponds to an on-off-keying signal, and/or adapted to operate the phototransistor (10) such that the envelope of the electrical output signal (26) corresponds to a pulse-width modulated signal.

8. The circuit (100) of claim 1, wherein the output electrical signal (26) corresponds to a modulated signal, the modulated signal having a signal part with a center frequency corresponding to a frequency of an envelope the optical input signal (24) and wherein the envelope of the modulated signal comprises information on the electrical input signal (22).

9. The circuit (100) of claim 6, wherein the envelope of the modulated signal corresponds to an on-off-keying signal, to a pulse-width modulated signal.

10. The circuit (100) of claim 1, further comprising a limiting amplifier (20) for amplifying the electrical output signal (26) for shortening rising and falling times between adjacent changes in the amplitude of the electrical output signal (26).

11. The circuit (100) of claim 1, wherein the optical input signal (24) corresponds to a reference clock signal from a central unit of a base station transceiver.

12. The circuit (100) of claim 1, wherein the electrical input signal (22) corresponds to an uplink receive signal from a receive antenna of a mobile communication system.

13. The circuit (100) of claim 1, further comprising means for converting the electrical output signal (26) to an optical output signal.

14. A remote unit for a base station transceiver of a mobile communication system, the base station transceiver comprising the remote unit and a central unit, the remote unit comprising the circuit (100) of claim 1.

15. A method for mixing an electrical input signal (22) with an optical input signal (24) to obtain an electrical output signal (26), the method comprising
inputting (200) the optical input signal (24) into an input (34) for the optical input signal (24) of a phototransistor (10) and inputting the electrical input signal (22) into an input (32) for the electrical input signal (22) of the phototransistor (10);
overdriving (210) the phototransistor (10) to an overdrive state such that the output electrical signal (26) comprises a clipped product signal of the electrical input signal (22) and the optical input signal (24); and
outputting (220) the electrical output signal (26).

## Patentansprüche

1. Schaltung (100) zum Mischen eines elektrischen Eingangssignals (22) mit einem optischen Ausgangssignal (24), um ein elektrisches Ausgabesignal zu erhalten (26), wobei die Schaltung (100) umfasst:
einen Fototransistor (10) mit einem Eingang (32) für das elektrische Eingangssignal (22);
einen Eingang (34) für das optische Eingangssignal (24); und
einen Ausgang (36) für das elektrische Ausgangssignal (26), wobei die Schaltung (100) weiterhin ausgelegt ist für den Betrieb des Fototransistors (10) in einem Übersteuerungszustand, dergestalt, dass das elektrische Ausgangssignal (36) ein geclipptes Produktsignal des elektrischen Eingangssignals (22) und des optischen Eingangssignals (24) umfasst.

2. Die Schaltung (100) nach Anspruch 1, wobei der Fototransistor (10) einem bipolaren Transistor (10) mit einem Basisendgerät (32) als Eingang für das elektrische Eingangssignal (22) entspricht, weiterhin einen transparenten Teil (34) des Gehäuses oder einem optischen Koppler als Eingang für das optische Eingangssignal (24) umfassend, dergestalt, dass das optische Eingangssignal (24) einen Basis-Emitter-Anschluss erreichen kann, sowie weiterhin ein Kollektorterminal (36) als Ausgang für das elektrische Ausgangssignal umfassend (26).

3. Die Schaltung (100) nach Anspruch 2, weiterhin eine erste Impedanz (Z₁) umfassend, die dafür ausgelegt ist, den Emitter (38) mit einem Referenzpotential der Schaltanordnung zu verwinden, eine zweite Impedanz (Z₂), die dafür ausgelegt ist, um den Kollektor (36) mit einem Versorgungspotential (Vcc) zu verbinden, eine dritte Impedanz (Z₃), die dafür ausgelegt ist, um das Basisterminal (32) mit dem Eingang für das elektrische Signal (22) zu verbinden, und eine vierte Impedanz (Z₄), die dafür ausgelegt ist, um den Eingang für das elektrische Signal (22) mit dem Referenzpotential zu verwinden.

4. Die Schaltung (100) nach Anspruch 1, weiterhin Komponenten umfassend, um einen DC-Offset des Eingangs des elektrischen Signals (22) dergestalt einzustellen, dass der Fototransistor (10) übersteuert ist oder dass der Fototransistor als Begrenzungsverstärker betrieben wird.

5. Die Schaltung (100) nach Anspruch 1, wobei der Fototransistor einem selbstschwingenden Mischer mit optischem Injection-Locking entspricht.

6. Die Schaltung (100) nach Anspruch 1, ausgelegt für den dergestalt erfolgenden Betrieb des Fototransistors (10), dass das elektrische Ausgangssignal (26) zwischen einem ersten Signalpegel und einem zweiten Signalpegel wechselt, wobei das elektrische Ausgangssignal (26) steigende und fallende Flanken zwischen dem ersten Signalpegel und dem zweiten Signalpegel hat, wobei eine Zeit oder ein Zeitintervall zwischen den steigenden und fallenden Flanken Informationen zu dem elektrischen Eingangssignal (22) signalisiert oder umfasst.

7. Die Schaltung (100) nach Anspruch 1, ausgelegt für den dergestalt erfolgenden Betrieb des Fototransistors (10), dass eine Zeit oder ein Zeitintervall zwischen einer ersten Flanke eines elektrischen Ausgangssignals (26) und eine abschließende zweite Flanke der Hülle des elektrischen Ausgangssignals (26) einen Pegel eines elektrischen Eingangssignals (22) repräsentiert, und/oder ausgelegt für den dergestalt erfolgenden Betrieb des Fototransistors (10), dass die Hülle des elektrischen Ausgangssignals (26) einem Ein-/Aus-Tastungssignal entspricht, und/oder ausgelegt für den dergestalt erfolgenden Betrieb des Fototransistors (10), dass die Hülle des elektrischen Ausgangssignals (26) einem pulsweitenmodulierten Signal entspricht.

8. Die Schaltung (100) nach Anspruch 1, wobei das elektrische Ausgangssignal (26) einem modulierten Signal entspricht, wobei das modulierte Signal über einen Signalteil mit einer Mittelfrequenz verfügt, die der Frequenz einer Hülle des optischen Eingangssignals (24) entspricht, und wobei die Hülle des modulierten Signals Informationen zu dem elektrischen Eingangssignal (22) umfasst.

9. Die Schaltung (100) nach Anspruch 6, wobei die Hülle des modulierten Signals einem Ein-/Aus-Tastungssignal oder einem pulsweitenmodulierten Signal entspricht.

10. Die Schaltung (100) nach Anspruch 1, weiterhin einen Begrenzungsverstärker (20) zur Verstärkung des elektrischen Ausgangssignals (26) zum Abkürzen der Anstiegs- und Abklingzeiten zwischen angrenzenden Änderungen in der Amplitude des elektrischen Ausgangssignals (26).

11. Die Schaltung (100) nach Anspruch 1, wobei das optische Eingangssignal (24) einem Referenztaktsignal von einer Zentraleinheit eines Basisstations-Sendeempfängers entspricht.

12. Die Schaltung (100) nach Anspruch 1, wobei das elektrische Eingangssignal (22) einem Uplink-Empfangssignal von einer Empfangsantenne eines mobilen Kommunikationssystems entspricht.

13. Die Schaltung (100) nach Anspruch 1, weiterhin Mittel für das Umwandeln des elektrischen Ausgangssignals (26) in ein optisches Ausgangssignal umfassend.

14. Entferne Einheit für einen Basisstations-Sendeempfänger eines mobilen Kommunikationssystems, wobei der Basisstations-Sendeempfänger die entfernte Einheit und eine Zentraleinheit umfasst, wobei die entfernte Einheit die Schaltung (100) nach Anspruch 1 umfasst.

15. Verfahren zum Mischen eines elektrischen Eingangssignals (22) mit einem optischen Ausgangssignal (24), um ein elektrisches Ausgabesignal (26) zu erhalten, wobei das Verfahren umfasst:
das Eingeben (200) des optischen Eingangssignals (24) in einen Eingang (34) für das optische Eingangssignal (24) an einem Fototransistor (10) und das Eingeben des elektrischen Eingangssignals (22) in einen Eingang (32) für das elektrische Eingangssignal (22) an dem Fototransistor (10);
das Übersteuern (210) des Fototransistors (10) in einen Übersteuerungszustand, dergestalt, dass das elektrische Ausgangssignal (26) ein geclipptes Produktsignal des elektrischen Eingangssignals (22) und des optischen Eingangssignals (24) umfasst; und
die Ausgabe (220) des elektrischen Ausgangssignals (26).

## Revendications

1. Circuit (100) pour mélanger un signal électrique d'entrée (22) à un signal optique d'entrée (24) afin d'obtenir un signal électrique de sortie (26), le circuit (100) comprenant :
un phototransistor (10) avec une entrée (32) pour le signal électrique d'entrée (22) ;
une entrée (34) pour le signal optique d'entrée (24) ; et
une sortie (36) pour le signal électrique de sortie (26), le circuit (100) étant en outre adapté pour faire fonctionner le phototransistor (10) dans un état de surcharge de sorte que le signal électrique de sortie (36) comprenne un signal de produit écrêté du signal électrique d'entrée (22) et du signal optique d'entrée (24).

2. Circuit (100) selon la revendication 1, dans lequel le phototransistor (10) correspond à un transistor bipolaire (10) avec une borne de base (32) comme entrée pour le signal électrique d'entrée (22), une partie transparente (34) du logement ou un coupleur optique comme entrée pour le signal optique d'entrée (24) de sorte que le signal optique d'entrée (24) puisse atteindre une jonction base-émetteur, et une borne du collecteur (36) comme sortie pour le signal électrique de sortie (26).

3. Circuit (100) selon la revendication 2, qui comprend en outre une première impédance (Z₁) adaptée pour connecter l'émetteur (38) à un potentiel de référence, une deuxième impédance (Z₂) adaptée pour connecter le collecteur (36) à un potentiel d'alimentation (Vcc), une troisième impédance (Z₃) adaptée pour connecter la borne de base (32) à l'entrée pour le signal électrique (22), et une quatrième impédance (Z₄) adaptée pour connecter l'entrée pour le signal électrique (22) au potentiel de référence.

4. Circuit (100) selon la revendication 1 comprenant en outre des composants pour régler un décalage CC de l'entrée du signal électrique (22) de sorte que le phototransistor (10) soit surchargé ou que le phototransistor fonctionne comme un amplificateur limiteur.

5. Circuit (100) selon la revendication 1 dans lequel le phototransistor correspond à un mélangeur auto-oscillant optiquement verrouillé par injection.

6. Circuit (100) selon la revendication 1 étant adapté pour faire fonctionner le phototransistor (10) de sorte que le signal électrique de sortie (26) paisse d'un premier niveau de signal à un deuxième niveau de signal, le signal électrique de sortie (26) comprenant des fronts de montée et de descente entre le premier niveau de signal et le deuxième niveau de signal, dans lequel une durée ou un intervalle de temps entre les fronts de montée et de descente signale ou contient des informations sur le signal électrique d'entrée (22).

7. Circuit (100) selon la revendication 1 étant adapté pour faire fonctionner le phototransistor (10) de sorte qu'une durée ou un intervalle de temps entre un premier front de l'enveloppe du signal électrique de sortie (26) et un deuxième front ultérieur de l'enveloppe du signal électrique de sortie (26) représente un niveau du signal électrique d'entrée (22), et/ou adapté pour faire fonctionner le phototransistor (10) de sorte que l'enveloppe du signal électrique de sortie (26) corresponde à un signal de modulation tout ou rien, et/ou adapté pour faire fonctionner le phototransistor (10) de sorte que l'enveloppe du signal électrique de sortie (26) corresponde à un signal à modulation de largeur d'impulsion.

8. Circuit (100) selon la revendication 1, dans lequel le signal électrique de sortie (26) correspond à un signal modulé, le signal modulé ayant une partie de signal avec une fréquence centrale correspondant à une fréquence d'une enveloppe du signal optique d'entrée (24) et dans lequel l'enveloppe du signal modulé comprend des informations sur le signal électrique d'entrée (22).

9. Circuit (100) selon la revendication 6, dans lequel l'enveloppe du signal modulé correspond à un signal de modulation tout ou rien, ou à un signal à modulation de largeur d'impulsion.

10. Circuit (100) selon la revendication 1, comprenant en outre un amplificateur limiteur (20) pour amplifier le signal électrique de sortie (26) pour raccourcir les durées de montée et de descente entre des changements adjacents dans l'amplitude du signal électrique de sortie (26).

11. Circuit (100) selon la revendication 1, dans lequel le signal optique d'entrée (24) correspond à un signal d'horloge de référence provenant d'une unité centrale d'un émetteur-récepteur de station de base.

12. Circuit (100) selon la revendication 1, dans lequel le signal électrique d'entrée (22) correspond à un signal de réception de liaison montante provenant d'une antenne de réception d'un système de communication mobile.

13. Circuit (100) selon la revendication 1, comprenant en outre des moyens pour convertir le signal électrique de sortie (26) en un signal optique de sortie.

14. Unité distante pour un émetteur-récepteur de station de base d'un système de communication mobile, l'émetteur-récepteur de station de base comprenant l'unité distante et une unité centrale, l'unité distante comprenant le circuit (100) selon la revendication 1.

15. Procédé pour mélanger un signal électrique d'entrée (22) à un signal optique d'entrée (24) afin d'obtenir un signal électrique de sortie (26), le procédé comprenant les étapes suivantes :
délivrer en entrée (200) le signal optique d'entrée (24) dans une entrée (34) pour le signal optique d'entrée (24) d'un phototransistor (10) et délivrer en entrée le signal électrique d'entrée (22) dans une entrée (32) pour le signal électrique d'entrée (22) du phototransistor (10) ;
surcharger (210) le phototransistor (10) dans un état de surcharge de sorte que le signal électrique de sortie (26) comprenne un signal de produit écrêté du signal électrique d'entrée (22) et du signal optique d'entrée (24) ; et
délivrer en sortie (220) le signal électrique de sortie (26).
